# EUROPEAN PATENT APPLICATION

(11) **EP 3 777 531 A1**
(43) Date of publication of application: **17.02.2021**
(21) Application number: 19020466.9
(22) Date of filing: 12.08.2019
(51) Int. Cl.: A01M 13/00, A01N 25/18, A01N 37/02

(54) **METHOD FOR FUMIGATION, ELECTRICALLY POWERED VAPORIZER AND SYSTEM FOR FUMIGATION**

(71) Applicant: Linde GmbH, 82049 Pullach (DE)
(72) Inventor: Miklos, Ernst, 85551 Kirchheim (DE); Bayerl, Wilhelm, 82054 Sauerlach (DE); Fieret, Jacob, Basingstoke, RG24 9NY (GB); Roynon, John, Acacia Gardens, NSW 2763 (AU)
(74) Representative: Gellner, Bernd

(57) **Abstract**

The present invention relates to a method for fumigation using a fumigant, wherein the fumigant comprises a mixture of at least a first component which is a fumigant active component and a second component which is a carrier component, said method comprising:
- mixing the at least first component and the at least second component;
- heating the mixture; and
- releasing the mixture for fumigation;
wherein when releasing the mixture for fumigation, the concentration of the first and/or second component in the released mixture is measured, and to an electrically powered vaporizer (1) and a system (100) for fumigation.

## Description

The present invention relates to a method for fumigation using a fumigant, wherein the fumigant comprises a mixture of at least a first component which is a fumigant active component and a second component which is a carrier component, and to an electrically powered vaporizer and a system for fumigation.

### Prior Art

Fumigation is an important control measure in the food industry for the treatment of incoming materials, either before leaving the country of origin or on arrival at the dockside before distribution. Fumigation only works properly if adequate concentration can be maintained for an adequate exposure period. Well known fumigants are phosphine or methyl bromide, which are in widespread use.

Ethyl formate (CH₃-CH₂-OCHO, C₃H₆O₂) is a fumigant, which is currently registered as a pesticide in Australia. It is considered to be a safer and more environmentally-friendly alternative to fumigants such as phosphine or methyl bromide. It is classified as a low risk GRAS (generally recognized as safe) food additive and is easily hydrolyzed to acceptable bi-products ethanol and formic acid.

Ethyl formate can be used as a fumigant, treating agricultural crops (grains, fruits, vegetables, etc.), food products, or any material goods (furniture, rooms, buildings, etc.) against different pests. It is therefore also considered a pesticide. Studies exist which indicate that ethyl formate is also suitable for herbicide type of applications.

Ethyl formate is a volatile compound. It has a boiling point of 54.3°C, a vapor pressure of 25.9 kPa at 20°C and a low flash point. It is also highly flammable in its liquid state which may pose handling risks. However, the flammability of ethyl formate can be reduced by combining it with carbon dioxide (CO₂) or another diluent. It has been found that ethyl formate mixed with CO₂ not only retains its efficacy as a fumigant but may also have increased efficacy (see WO 03/061384 A1).

Such a mixture of ethyl formate and CO₂ is currently supplied as VAPORMATE by the applicant in cylinders, containing ethyl formate as active substance dissolved in liquid CO₂. The ratio is 11% by volume (corresponds to 16.7% by weight) of ethyl formate in balance with CO₂. A typical cylinder pressure is 6300 kPa / 63 bar (vapor pressure).

Regardless for what the product is used, the current procedure foresees to withdraw the mixture of ethyl formate and CO₂ from the cylinder via a dip tube, and to subsequently vaporize the mixture, to apply it in gaseous form to the subject of treatment. A portable electric vaporizer for vaporizing the mixture is disclosed in EP 2681993 A1.

During the withdrawal of the mixture from the cylinder, the concentration of ethyl formate in CO₂ might change. Depending on the extracted and/or remaining liquid in the cylinder and on the liquid/vapor ratio, the concentration might vary especially at the emptier cylinder stage. This can lead to a higher ethyl formate concentration in CO₂ at the end of the emptying process of the cylinder which can negatively impact the material (fruit, vegetable, etc.). Further, too high ethyl formate concentrations will increase the risk of flammability, as ethyl formate is a highly flammable substance. So if for example a cylinder is emptied to more than 90% the ratio of ethyl formate in the liquid CO₂ can raise up to 40%.

A method to avoid these risks is to continuously measure the weight of the cylinder during the emptying process and to stop the withdrawal of the mixture once a critical level (e.g. 20% remaining content) is reached. Beyond that critical level of content in the cylinder, the concentration of ethyl formate in the mixture is too high and the remaining mixture cannot be used anymore.

It is an object of the present invention to provide a method for fumigation, an electrically powered vaporizer and a system which avoids the above mentioned disadvantages.

### Disclosure of the invention

This object is solved by a method for fumigation using a fumigant, wherein the fumigant comprises a mixture of at least a first component which is a fumigant active component and a second component which is a carrier component, an electrically powered vaporizer and a system for fumigation according to the independent claims. Preferred embodiments of the invention and further features are subject of the following description and the respective dependent claims.

According to the present invention, said method for fumigation comprises: mixing the at least first component and the second component; heating the mixture; and releasing the mixture for fumigation. Further, when releasing the mixture for fumigation, the concentration of the first component in the released mixture is measured.

In this embodiment, only the mixture of the first component, which is the fumigant active component, and the second component, which is the carrier component, is used as the fumigant. It is noted that in addition to the first fumigant active component, one or more other fumigant active components may be used. Fumigant active components may be ethyl formate, 1,3-dichloropropene, dazomet (methyl isothiocyanate precursor), chloropicrin, iodoform, methyl isocyanate or sulfuryl fluoride.

The mixture is heated to a pre-defined temperature to make sure that the fumigant active component reaches a temperature above its dew point to ensure that the fumigant active component is fully vaporized, allowing the fumigant active component to achieve its maximum effect. The actual value for the dew point depends on the kind of the fumigant avtive component and the actual pressure. At 1,013 mbar the dew point of ethyl formate is equal to the boiling point and is 54°C.

The concentration of the first component in the released mixture may increase during release. The higher concentration of the first component can cause damage to treated materials (fruit, vegetable, etc.) and people, for example, operators. In order to prevent damage, the concentration of the first component, i.e. the fumigant active component, and/or second component, i.e. the carrier component is measured during the release.

Preferably the first component is ethyl formate (CH₃-CH₂-OCHO, C₃H₆O₂) and the second component is carbon dioxide (CO₂), which is also acting as a diluent for the ethyl formate. Ethyl formate is classified as a low risk GRAS (generally recognized as safe) food additive and is easily hydrolyzed to acceptable bi-products ethanol and formic acid. Ethyl formate is an effective fumigant against a wide variety of pests. CO₂ is not only acting as a diluent for the ethyl formate but it is also acting as a carrier component when the mixture is released.

When ethyl formate and CO₂ are mixed and stored, for example in a gas cylinder, and the temperature is below the critical temperature of CO₂, then the vapor above the liquid in the gas cylinder consists almost entirely of CO₂ because the dew point and the boiling point of ethyl formate under these circumstances are much higher than that of CO₂. For this reason, the mixture is stored in gas cylinders which have a so-called dip tube connected to a valve inside the gas cylinder which reaches almost to the bottom of the cylinder so that it is never possible to withdraw only the gaseous phase product which consists almost entirely of CO₂.

As a consequence of the different boiling points an adverse effect occurs. As the amount of the liquid mixture of ethyl formate and CO₂ in the gas cylinder is depleted during the release because CO₂ evaporates faster than ethyl formate, the concentration of ethyl formate in the remaining liquid increases. Too high ethyl formate concentrations, however, will increase the risk of flammability, as ethyl formate is a highly flammable substance. It is therefore advantageous to measure the concentration of ethyl formate during the release to prevent possible damage to treated materials (fruit, vegetable, etc.) and people.

By measuring the concentration of the ethyl formate and/or CO₂ during the release, it is not necessary to measure the weight of the gas cylinder with a scale in order to determine the concentration of ethyl formate in the gas cylinder. In many cases, measuring the weight of the gas cylinder is difficult and, depending on the accuracy of the scale, the concentration of ethyl formate can only be determined inaccurately.

In addition, after fumigation, the mixture is usually released into the atmosphere from fumigated spaces. In different countries there are different legal limits which must not be exceeded. In Germany, for example, only a maximum mass flow of 0.5 kg per hour and a maximum concentration of 50 mg/m³ of ethyl formate in the exhaust gas are permitted. It is therefore necessary to measure the concentration of ethyl formate during the release to prevent exceeding the legal limits.

Preferably the mixture of ethyl formate and CO₂ comprises ethyl formate in a concentration of 5-15% by volume, especially 11% by volume, dissolved in CO₂. These values correspond to a concentration of 10-20% by weight, especially 16% by weight. This initial concentration is chosen so that a sufficient amount of the mixture may be released until a predetermined concentration of ethyl formate in the released mixture is reached and therefore, the release of the mixture must be stopped.

Preferably the mixture is heated to 70°C-90°C, especially to 80°C. This temperature e.g. prevents the CO₂ from freezing into CO₂ snow as it is released. In addition, this temperature is above the boiling point of 54.3°C of ethyl formate, which ensures that ethyl formate is fully vaporized.

Preferably the mixture is gaseous when the mixture is released. This ensures, that e.g. ethyl formate may be applied as a vapor to disperse evenly and having the greatest effect for fumigation.

Preferably the mixture is only released when the measured concentration of ethyl formate in the released mixture is below about 20% by weight. This ensures that the concentration during the release does not exceed this critical concentration value, which would increase the risk of producing a flammable mixture.

Preferably the method further comprises a step of recovering at least one of the first and second components of the mixture, especially the ethyl formate, wherein the recovering comprises at least one of absorption and adsorption and heat exchanging.

After fumigation, the mixture is usually released into the atmosphere from fumigated spaces. Recovering at least one of the first and second components is financially attractive and reduces for example the amount of ethyl formate vented to the atmosphere. In addition, it is possible to re-use the collected ethyl formate in the same fumigation method in a loop, which will drastically reduce the raw material costs, and helps to ensure that the legal limits are not exceeded.

One method for recovering e.g. ethyl formate uses an absorption medium such as for example activated carbon, which selectively absorbs the ethyl formate and which can be released from the activated carbon by means of a heating cycle.

Another method for recovering e.g. ethyl formate feeds the vented gas through a suitable adsorbent liquid, for example Octane, which is configured to release the captured ethyl formate by heating the liquid. The capture rate may be increased by cooling this liquid.

Yet another method for recovering e.g. ethyl formate passes the vented gas through a heat exchanger, which is cooled to a suitably low temperature, for example between about -40°C and -75°C such that the ethyl formate condenses and drips into a collection tray. The temperature of the heat exchanger is chosen such that the majority of the ethyl formate (for example 95%) condenses and is captured for re-use. The heat exchanger can be chilled with a conventional refrigeration unit or by a cryogenic gas such as for example liquid nitrogen or liquid carbon dioxide.

According to another aspect of the invention, an electrically powered vaporizer is provided, comprising a container vessel for receiving and holding a fumigant comprising a mixture of at least a first component which is a fumigant active component and a second component which is a carrier component; input means through which the vaporizer receives the mixture; output means through which the vaporizer releases the mixture; heating means for heating the mixture; a control panel for controlling the vaporizer; and an integrated valve having either an opened state for releasing the mixture or a closed state for stopping the release of the mixture; wherein the vaporizer comprises a fumigant active component sensor, which measures the concentration of the fumigant active component, e.g. ethyl formate, in the released mixture. Additionally or alternatively, it is also possible to have a carrier gas sensor for measuring the concentration of the second component (balance or carrier gas) and to use this result for further actions.

The vaporizer may be an assembly with a cylindrical or rectangular body. The vaporizer comprises the container vessel, which houses the heating means, wherein the container vessel comprises a closed bottom side and an initially open top side opposite the bottom side. The open top side may be covered and sealed with a closing plate. Thus the container vessel can be vacuum sealed. The control panel may be disposed above the closing plate.

The input means advantageously comprises an inlet connection, which is configured to be coupled to a fumigant supplying device, said fumigant supplying device containing the fumigant mixture, an inlet valve and an inlet hose through which the vaporizer receives the mixture. The input means may further comprise a temperature gauge.

The output means advantageously comprises an insulated outlet hose to maintain the vaporized mixture at a substantially constant temperature, to minimize heat leak through the hose and/or to protect an operator from potential burns. The output means may further comprise a temperature gauge and an outlet connection, which is configured to be coupled to a fumigant receiving unit depending on the type of use of the fumigant. The output means may further comprise a pressure gauge for measuring the pressure inside the container vessel.

The vaporizer further comprises the fumigant active component, e.g. the ethyl formate, sensor or a CO₂ sensor. The ethyl formate or CO₂ sensor is a NDIR, FTIR, photoacoustic detector, GC, MS, etc. The ethyl formate or CO₂ sensor is disposed in the output means, for example, in the outlet hose.

In an advantageous embodiment of the vaporizer, the heating means comprises an electrically heated oil bath. For example, the mixture is guided through the oil bath via a heat exchanger coil and thus vaporizes. In another embodiment, an expansion chamber is disposed above the oil bath into which the mixture is guided and is vaporized at an interface between the oil bath and the expansion chamber. As described above, the mixture is heated to 70°C-90°C, especially to 80°C.

In an advantageous embodiment, the control panel houses control electrics and is configured to control the vaporizer. Controlling the vaporizer may include controlling the heating means, controlling the power supply, and controlling the integrated valve. Controlling the integrated valve comprises setting the integrated valve either in the opened or in the closed state. Further, the ethyl formate sensor may be connected to the control electrics of the control panel, allowing the control panel to monitor the measurement of the concentration.

Preferably the vaporizer further comprises a stop button which, when operated, is configured to set the integrated valve to the closed state, so that the release of the mixture is stopped. It is thus possible to stop the release of the mixture by pressing the stop button, for example, if the concentration of ethyl formate in the released mixture measured by the ethyl formate sensor exceeds the critical concentration value, e.g. 20 % by weight. The stop button is preferably disposed on the control panel. Alternatively, the integrated valve may be automatically set to the closed state, if the concentration of ethyl formate exceeds the critical concentration value.

As described above, if for example a gas cylinder is used as a fumigant supplying device, the concentration of ethyl formate in the liquid may change. If the concentration of ethyl formate exceeds the critical concentration value, the integrated valve is set to the closed state either by pressing the stop button or automatically, and the release of the mixture is stopped, with the result that the remaining liquid in the gas cylinder must no longer be used and the gas cylinder must be replaced with a new one in order to continue the fumigation.

Preferably the vaporizer further comprises a reset button which, when operated, is configured to reset the integrated valve to the opened state so that the release of the mixture is able to be continued. The reset button is necessary to open the valve when the vaporizer to be used for fumigation is transported to a desired location and is connected to a fumigant supply device. On the other hand, the button is used to continue fumigation after replacement of a fumigant supplying device. The reset button is preferably disposed on the control panel.

Preferably the vaporizer further comprises an alarm system for notifying that the measured concentration e.g. of ethyl formate in the released mixture is above e.g. about 18 % by weight. The notification is configured to be performed locally and/or remotely. The notification may be performed locally by means for outputting an alarm signal in the form of an alarm tone or an alarm light and/or remotely by means for transmitting an alarm signal to a monitoring data station or an operator, for example. In the case of local notification, an operator may operate the stop button to stop the release of the mixture.

Preferably the vaporizer further comprises a control circuit configured to set the integrated valve to the opened or closed state, and wherein the control circuit is configured to automatically set the integrated valve to the closed state when the alarm system notifies that the measured concentration of e.g. ethyl formate in the released mixture is above about 20 % by weight. In the case of remote notification it is preferred that the control circuit sets the integrated valve to the closed state automatically, especially, if there is no operator present. Without setting the integrated valve automatically in the closed state, a mixture would be released that would exceed the critical concentration value, causing possible damage to the material (fruits, vegetables etc.) to be fumigated.

The control circuit performs the setting of the integrated valve either electrically or pneumatically. In the case of performing the setting electrically, the control circuit is part of or connected to the control electrics of the control panel. In the case of performing the setting pneumatically, the control circuit is connected to and controlled by the control electrics of the control panel.

Preferably the vaporizer further comprises an integrated memory card which stores the measured concentration values of ethyl formate in the released mixture measured by the ethyl formate sensor. The memory card may be fixed to the vaporizer, for example the memory card may be mounted inside the control panel or outside the vaporizer on a data plate. The stored concentration values may be used after the fumigation for quality documentation purposes.

Preferably the vaporizer further comprises an integrated sender which transfers the measured concentration values to a receiving device. This allows the measured concentration to be monitored already during fumigation. In the case that the integrated valve is set to the closed state, the integrated sender may also transfer a notification to the receiving device that the integrated valve is in the closed state. The transfer may be performed via Bluetooth, Email, SMS, etc. In addition, a notification may appear on the digital display of the control panel indicating that the integrated valve is in the closed state.

Preferably the receiving device is a handheld device or a monitoring data station. In a case of a handheld device, e.g. mobile phone and/or tablet, an operator can monitor the concentration of ethyl formate in the released mixture during fumigation. In the case of a monitoring data station, the concentration values may be stored in the monitoring data station in addition to monitoring the concentration values. Further, the monitoring data station may collect more related data, such as temperature, moisture, GPS, time, cylinder identification, fumigation operator, crop type, pest type, etc..

According to another aspect of the invention, a system for fumigation using a fumigant is disclosed. The system comprises a fumigant supplying device, wherein the fumigant comprising a mixture of at least a first component which is a fumigant active component and a second component which is a carrier component, and an electrically powered vaporizer, as described above, which is coupled to a valve of the fumigant supplying device via input means of the vaporizer. Regarding further embodiments, reference is made to the other aspects of the present invention.

The fumigant supplying device may, for example, be a gas cylinder or another suitable vessel in which the fumigant was filled. It should be noted that the fumigant supplying device may also have a plurality of gas cylinders and an automatic exchange device may replace one or more gas cylinders whose liquid has reached the critical concentration value with one or more unused gas cylinders. In this embodiment, measuring the concentration of ethyl formate allows an optimized gas cylinder supply and an exchange of nearly empty cylinders.

Preferably, the system further comprises a fumigation chamber into which the mixture is provided for fumigation. The fumigation chamber comprises at least an inlet pipe comprising an inlet valve configured to be connected to the outlet hose of the vaporizer.

The fumigation chamber may be a permanently installed fumigation warehouse, for example a warehouse in which materials such as fruit, vegetables but also furniture etc. are stored. However, the fumigation chamber may also be a fumigation warehouse in which, for example, newly arrived ship containers are stored and/or fumigated at ports. The fumigation chamber may alternatively be an airtight tent, which is placed over a house infested by pests.

The vaporized mixture is provided in the fumigation chamber in gaseous form with a temperature of especially 80°C. This temperature is needed to prevent the gaseous CO₂ in the mixture from freezing into CO₂ snow as it is released into the fumigation chamber. The ethyl formate must be applied as a vapor in order to dispense evenly in the fumigation chamber, to ensure all the materials to be fumigated are covered by the ethyl formate.

Preferably the system further comprises a recovering unit which is connected to the fumigation chamber and recovers at least one of the first and second component of the mixture from the fumigation chamber. The fumigation chamber comprises at least an outlet pipe comprising an outlet valve configured to be connected to a pipe of the recovering unit.

After fumigation, the mixture is usually released into the atmosphere from the fumigation chamber. Recovering at least one of the first and second components is financially and environmentally attractive and reduces for example the amount of ethyl formate vented to the atmosphere. In addition, it is possible to re-use the collected ethyl formate in the same fumigation method in a loop, which will drastically reduce the raw material costs, and helps to ensure that the legal limits are not exceeded.

After fumigation, the atmosphere from the fumigation chamber, which at least comprises air and the mixture, is guided from the fumigation chamber to the recovering unit. For recovering at least one of the first and second components from the mixture, in particular ethyl formate, the recovering unit uses at least one of the following methods.

One method for recovering ethyl formate uses an absorption medium such as for example activated carbon, which selectively absorbs the ethyl formate and which can be released from the activated carbon by means of a heating cycle.

Another method for recovering the ethyl formate feeds the vented gas through a suitable adsorbent liquid, for example Octane, which is configured to release the captured ethyl formate by heating the liquid. The capture rate may be increased by cooling this liquid.

Yet another method for recovering the ethyl formate passes the vented gas through a heat exchanger, which is cooled to a suitably low temperature, for example between about -40°C and -75°C such that the ethyl formate condenses and drips into a collection tray. The temperature of the heat exchanger is chosen such that the majority of the ethyl formate (for example 95%) condenses and is captured for re-use. The heat exchanger can be chilled with a conventional refrigeration unit or by a cryogenic gas such as for example liquid nitrogen or liquid carbon dioxide.

The invention is further explained with references to the appended drawings which show preferred embodiments of the invention.

### Short description of the figures

Figure 1 schematically illustrates a vaporizer according to a preferred embodiment of the invention.
Figure 2 schematically illustrates a control panel of the vaporizer according to the embodiments of the invention in an external view.
Figure 3 schematically illustrates a system for fumigation according to the invention.

In the figures, like elements are indicated with identical reference numerals. A repeated explanation is omitted for reasons of conciseness.

### Embodiments of the invention

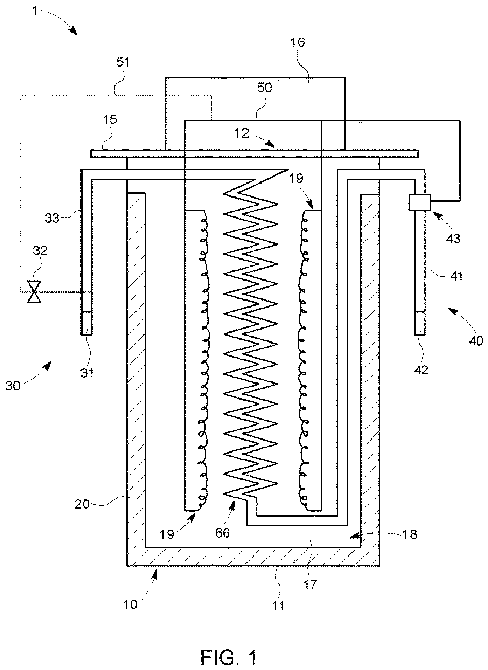

Figure 1 schematically illustrates a vaporizer 1 according to a preferred embodiment of the invention. The vaporizer 1 is an assembly with a cylindrical body. The vaporizer 1 comprises a container vessel 10. The container vessel 10 comprises a closed bottom side 11 and an initially open top side 12. The open top side 12 is covered and sealed with a closing plate 15. Thus the container vessel 10 is vacuum sealed. A control panel 16 is disposed above the closing plate 15.

Oil 17 is provided into a space 18 formed by the closed bottom side 11 and the covering plate 15 covering the open top side 12. Two heating elements 19, configured to heat the oil 17, and a heat exchanger coil 66 are disposed inside the space 18. The two heating elements 19 are connected to control electrics 50 of the control panel 16 to obtain power from a power source (not shown) of the control panel 16. Further, the control panel 16 is configured to control the heating elements 19. The oil 17 is heated to a temperature around 110°C by the heating elements 19. The closed bottom side 11, in this embodiment, comprises insulation means, for example a vacuum insulated shell 20. The vacuum insulated shell 20 maintains a substantially constant temperature inside the space 18.

Further the vaporizer 1 comprises input means 30. The input means 30 comprise an inlet connection 31, which is configured to be coupled to a fumigant supplying device (not shown), said fumigant supplying device containing the fumigant mixture, in particular a mixture of ethyl formate and CO₂, an inlet valve 32 and an inlet hose 33 through which the vaporizer 1 receives the mixture. The input means may further comprise a temperature gauge (not shown). The inlet hose 33 is coupled to the heat exchanger coil 66.

When the vaporizer 1 receives the mixture, the mixture flows through the inlet hose 33 into the heat exchanger coil 66. Inside the heat exchanger coil 66, the mixture is heated to 80°C and is vaporized. This temperature prevents the CO₂ from freezing into CO₂ snow as it is released. In addition, this temperature is above the boiling point of 54.3°C of ethyl formate, which ensures that ethyl formate is fully vaporized.

Further the vaporizer 1 comprises output means 40. The output means 40 comprise an insulated outlet hose 41 to maintain the vaporized mixture at a substantially constant temperature, to minimize heat leak through the outlet hose 41 and/or to protect an operator from potential burns, and an outlet connection 42. The outlet hose 41 is coupled to the heat exchanger coil 66. When the mixture is vaporized in the heat exchanger coil 66, the vaporized mixture then flows from the heat exchanger coil 66 into the outlet hose 41 through an ethyl formate sensor 43 e.g. NDIR, FTIR, photoacoustic detector, GC, MS, etc., and releases the mixture from the heat exchanger coil 66. The sensor 43 measures the concentration of ethyl formate during the release of the mixture.

If the measured concentration of ethyl formate in the released mixture exceeds a predetermined value, for example a critical concentration value, the vaporizer 1 must not receive and release any further mixture. For this purpose, the vaporizer 1 comprises an integrated valve 32a having either an opened state for releasing the mixture or a closed state for stopping the release of the mixture. In this embodiment, the integrated valve 32a is coupled to the input means, thus the integrated valve 32a corresponds to the inlet valve 32 in this embodiment. If the inlet valve 32 is set to the closed state, a release of the mixture in the heat exchanger coil 66 is stopped. It should be noted that the integrated valve 32a may also be coupled to the output means, for example, to the outlet hose.

The inlet valve 32 may further be connected to a control circuit 51. In such a case, the control circuit 51 performs the setting of the inlet valve 32 either electrically or pneumatically. In this embodiment, the control circuit 51 is connected to the control electrics 50 of the control panel 16 and the control panel 16 performs the setting of the inlet valve 32 electrically.

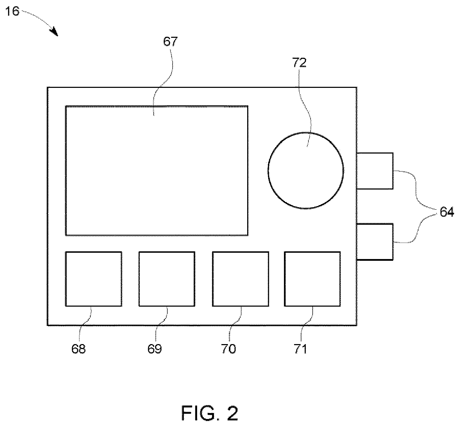

Figure 2 schematically illustrates a control panel 16 of the vaporizer 1 according to the embodiments of the invention in an external view. The control panel 16 houses control electrics 50 and is configured to control the vaporizer 1. The control panel 16 comprises a digital display 67. The control electrics 50 are connected with the heating elements 19 for controlling and monitoring the heating of the oil 17, which heats the mixture. The current temperature of the oil 17 may be displayed on the digital display 67. The control electrics 50 are connected to the control circuit 51 configured to set the integrated valve 32a either to the opened state or to the closed state. When the integrated valve 32a is set in the closed state, a notification may appear on the digital display 67 of the control panel 16 indicating that the integrated valve 32a is in the closed state.

Further, the control panel 16 comprises connections 64 configured for establishing a connection to an external power source (not shown), for example an electrical grid.

The control panel 16 comprises a switch 68 for switching the vaporizer 1 on and off and a switch 69 for switching the heating elements 17 on and off. Further, the control panel 16 comprises a stop button 70 which, when operated, is configured to set the integrated valve 32a to the closed state, so that the release of the mixture is stopped. The control panel 16 further comprises a reset button 71 which, when operated, is configured to reset the integrated valve 32a to the opened state so that the release of the mixture is able to be continued. As described beforehand, the buttons 69 - 71 could be dispensed with if the system is fully automatically operated.

The control panel comprises an alarm system for notifying that the measured concentration of ethyl formate in the released mixture has exceeded the critical concentration value. The notification may be performed locally by means for outputting an alarm signal in the form of an alarm tone or an alarm light. For this purpose the control panel 16 comprises an alarm light 72 that emits a light. In addition, a notification may be performed remotely by means for transmitting an alarm signal to a monitoring data station or an operator via the integrated sender. Additionally, the control panel 16 can automatically set the integrated valve 32a to the closed state when the alarm starts.

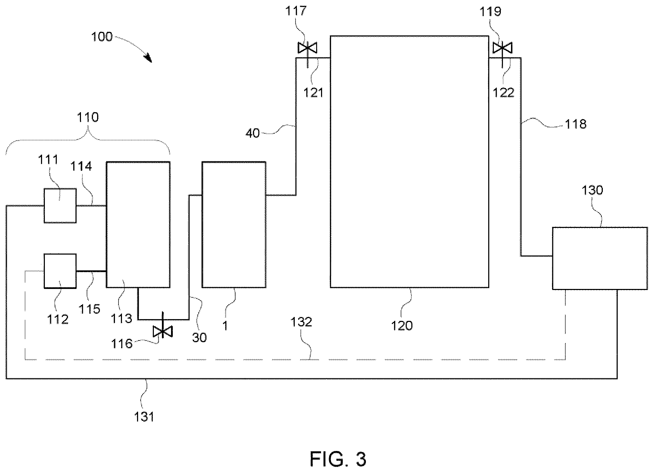

Figure 3 schematically illustrates a system 100 for fumigation according to the invention. The system 100 in this embodiment represents a large-scale plant which is permanently installed at a location and serves to fumigate materials. The system 100 comprises a fumigant supplying device 110, the electrically powered vaporizer 1 as described above, a fumigation chamber 120 and a recovering unit 130.

As a fumigant, a mixture of at least a first component and a second component is used. In particular, the first component is ethyl formate, which is the fumigant active component, and the second component is CO₂, which is the carrier component. Ethyl formate is stored as a liquid in a first tank 111 and CO₂ is stored in a second tank 112. The fumigant supplying device 110 comprises a vessel 113, which is connected via a pipe 114 to the first tank 111 and via a pipe 115 to the second tank 112, and the mixture is mixed directly in the vessel 113.

It should be noted that this is only an example of such a fumigant supplying device and this invention is not limited thereto. A gas cylinder may also be used as a fumigant supplying device. It should be noted that the fumigant supplying device may also have a plurality of gas cylinders and an automatic exchange device may replace one or more gas cylinders whose liquid has reached the critical concentration value with one or more unused gas cylinders.

The vessel 113 comprises at least one valve 116 which is connected to the vaporizer 1 via the input means 30 of the vaporizer 1. The vaporizer 1 receives the mixture and the mixture is vaporized by heating to 80°C. The vaporized mixture is provided to the fumigation chamber 120 via the output means 40 of the vaporizer 1. For this purpose, the fumigation chamber 120 comprises an inlet pipe 121 comprising an inlet valve 117, which is connected to the vaporizer 1 via the output means 40. In this embodiment, it is not necessary to measure the concentration of ethyl formate in the mixture during release as the mixture can be mixed in the vessel 113 in such a way that the released mixture does not cause damage or is flammable. However, the concentration of ethyl formate may be measured to monitor, for example, a fault-free mixture of the components. In addition, the measured and stored concentration values can be used after the fumigation for quality documentation purposes.

The fumigation chamber 120 is a permanently installed fumigation warehouse, for example a warehouse in which materials such as fruit, vegetables but also furniture etc. are stored. However, the fumigation chamber may also be a fumigation warehouse in which, for example, newly arrived ship containers are stored and/or fumigated at ports.

The vaporized mixture is provided in the fumigation chamber 120 in gaseous form with a temperature of especially 80°C. This temperature prevents the gaseous CO₂ in the mixture from freezing into CO₂ snow as it is released into the fumigation chamber 120. The ethyl formate must be applied as a vapor in order to dispense evenly in the fumigation chamber 120, to ensure all the materials to be fumigated are covered by the ethyl formate.

After fumigation, the mixture was usually released into the atmosphere from the fumigation chamber 120. Recovering at least one of the first and second components, in particular ethyl formate, is financially and environmentally attractive and reduces for example the amount of ethyl formate vented to the atmosphere. In addition, it is possible to re-use the collected ethyl formate in the same fumigation method in a loop, which will drastically reduce the raw material costs, and helps to ensure that the legal limits are not exceeded.

After fumigation, the atmosphere from the fumigation chamber 120, which at least comprises air and the mixture, is guided from the fumigation chamber 120 to the recovering unit 130 via a pipe 118. The fumigation chamber 120 comprises an outlet pipe 122 comprising an outlet valve 119 which is only opened when the atmosphere is to be guided from the fumigation chamber 120 into the recovering unit 130. For recovering at least one of the first and second components from the mixture, the recovering unit 130 uses at least one of the following methods.

One method for recovering ethyl formate uses an absorption medium such as for example activated carbon, which selectively absorbs the ethyl formate and which can be released from the activated carbon by means of a heating cycle.

Another method for recovering the ethyl formate feeds the vented gas through a suitable adsorbent liquid, for example Octane, which is configured to release the captured ethyl formate by heating the liquid. The capture rate may be increased by cooling this liquid.

Yet another method for recovering the ethyl formate passes the vented gas through a heat exchanger, which is cooled to a suitably low temperature, for example -40°C to - 75°C such that the ethyl formate condenses and drips into a collection tray. The temperature of the heat exchanger is chosen such that the majority of the ethyl formate (for example 95%) condenses and is captured for re-use. The heat exchanger can be chilled with a conventional refrigeration unit or by a cryogenic gas such as for example liquid nitrogen or liquid carbon dioxide.

Even if only ethyl formate is recovered in this embodiment, it is possible to recover CO₂ at the same time. This may, for example, be performed in the same recovering unit or in a separate unit. After recovery of the first component and/or the second component, the first component and/or the second component may be returned to the respective tanks 111, 112 via pipes 131, 132.

## Claims

1. A method for fumigation using a fumigant, wherein the fumigant comprises a mixture of at least a first component which is a fumigant active component and a second component which is a carrier component, said method comprising:
- mixing the at least first component and the at least second component;
- heating the mixture; and
- releasing the mixture for fumigation;
**characterized in that** when releasing the mixture for fumigation, the concentration of the first and/or of the second component in the released mixture is measured.

2. The method according to claim 1, **characterized in that** the first component is ethyl formate (CH₃-CH₂-OCHO, C₃H₆O₂) and the second component is carbon dioxide (CO₂).

3. The method according to claim 2, **characterized in that** the mixture of ethyl formate and CO₂ comprises ethyl formate in a concentration of 5-15% by volume, especially 11% by volume, dissolved in CO₂.

4. The method according to any one of the preceding claims, **characterized in that** the mixture is heated to 70°C-90°C, especially to 80°C.

5. The method according to any one of the preceding claims, **characterized in that** the mixture is gaseous when the mixture is released.

6. The method according to any one of the preceding claims as far as depending on claim 2, **characterized in that** the mixture is only released when the measured concentration of ethyl formate in the released mixture is below 20% by weight.

7. The method according to any one of the preceding claims, **characterized in that** the method further comprises a step of recovering at least one of the first and second component of the mixture, wherein the recovering comprises at least one of absorption and adsorption and heat exchanging.

8. An electrically powered vaporizer (1), comprising
- a container vessel (10) for receiving and holding a fumigant comprising a mixture of at least a first component which is a fumigant active component and a second component which is a carrier component;
- input means (30) through which the vaporizer (1) receives the mixture;
- output means (40) through which the vaporizer (1) releases the mixture;
- a control panel (16) for controlling the vaporizer (1);
- heating means (19) for heating the mixture; and
- an integrated valve (32a) which is either in an opened state for releasing the mixture or in a closed state for stopping the release of the mixture; **characterized in that** the vaporizer (1) comprises at least one sensor (43), which measures the concentration of the first and/or second component in the released mixture.

9. The vaporizer (1) according to claim 8, **characterized in that** the vaporizer (1) further comprises a stop button (70) which, when operated, is configured to set the integrated valve (32a) to the closed state, so that the release of the mixture is stopped.

10. The vaporizer (1) according to claim 8 or 9, **characterized in that** the vaporizer (1) further comprises a reset button (71) which, when operated, is configured to reset the integrated valve (32a) to the opened state so that the release of the mixture is able to be continued.

11. The vaporizer (1) according to any one of claims 8 to 10, **characterized in that** the vaporizer (1) further comprises an alarm system for notifying that the measured concentration of the fumigant active component in the released mixture is above 18% by weight.

12. The vaporizer (1) according to claim 11, **characterized in that** the vaporizer (1) further comprises a control circuit (51) configured to set the integrated valve (32a) to the opened or closed state, and wherein the control circuit (51) is configured to automatically set the integrated valve (32a) to the closed state when the alarm system notifies that the measured concentration of the fumigant active component in the released mixture is above 20% by weight.

13. The vaporizer (1) according to any one of claims 8 to 12, **characterized in that** the vaporizer (1) further comprises an integrated memory card which stores the measured concentration values of the fumigant active component in the released mixture measured by the sensor (43).

14. A system (100) for fumigation using a fumigant, comprising:
- a fumigant supplying device (110), the fumigant comprising a mixture of at least a first component which is a fumigant active component and a second component which is a carrier component; and
- an electrically powered vaporizer (1) according to any one of claims 8 to 15, which is coupled to a valve (116) of the fumigant supplying device (110) via input means (30) of the vaporizer (1).

15. The system (100) according to claim 14, **characterized in that** the system (100) further comprises a recovering unit (130) which is connected to the fumigation chamber (120) and recovers at least one of the first and second component of the mixture from the fumigation chamber (120).
